# EUROPÄISCHE PATENTSCHRIFT

(11) **EP 4 488 151 B1**
(45) Veröffentlichungstag und Bekanntmachung des Hinweises auf die Patenterteilung: **13.05.2026**
(21) Anmeldenummer: 24180493.9
(22) Anmeldetag: 06.06.2024
(51) Int. Cl.: B62J 6/04, B62J 1/08

(54) **FAHRRADKOMPONENTE, SATTELSTÜTZE UND FAHRRAD**
BICYCLE COMPONENT, SEAT POST, AND BICYCLE
COMPOSANT DE BICYCLETTE, TIGE DE SELLE ET BICYCLETTE

(30) Priorität: 07.07.2023 DE 202023103797 U
(43) Veröffentlichungstag der Anmeldung: 08.01.2025
(73) Patentinhaber: Canyon Bicycles GmbH, 56073 Koblenz (DE)
(72) Erfinder: Faucher, Mathis, 34380 Argelliers (FR); de Marne, Pierre, 74190 Plateau d'Assy (FR); Oppermann, Philip, 53225 Bonn (DE); Kohl, Wolfgang, 91126 Schwabach (DE)
(74) Vertreter: dompatent

(56) Entgegenhaltungen:
- FR-A1- 2 977 228
- JP-U- S5 755 104
- KR-A- 20170 125 623
- US-A- 6 158 881
- US-A1- 2016 362 154

## Beschreibung

Die Erfindung betrifft eine Fahrradkomponente, eine Sattelstütze und ein Fahrrad.

Zur Umsetzung der Beleuchtung von Fahrrädern werden meist externe Leuchten an den Fahrradrahmen, bspw. an den Lenker und/oder die Sattelstütze angebracht. Externe Leuchten führen hierbei z. B. zu Nachteilen bei der Ästhetik und/oder Aerodynamik des Fahrrads. Ferner kommt es häufig zu Diebstählen oder der Beschädigung der externen Leuchten. Weitergehend sind externe Leuchten anfällig für Staub, Wasser und/oder Schmutz.

Darüber hinaus existieren Ansätze die Beleuchtung in Fahrradkomponenten, wie bspw. den Lenker und/oder die Sattelstütze zu integrieren. Hierbei werden Löcher, insbesondere Bohrungen, in der Fahrradkomponente vorgesehen. In bzw. hinter diesen Löchern werden sodann innerhalb der Fahrradkomponente Leuchten angeordnet, die zu einer Beleuchtung des Fahrrads dienen. Löcher weisen den Nachteil auf, dass sie zu einer Strukturveränderung der Fahrradkomponente führen. So kann es zu negativen Auswirkungen bzgl. Festigkeit und/oder dynamischem Verhalten der Fahrradkomponente kommen. Ferner können durch Löcher Staub, Wasser und/oder Schmutz in die Fahrradkomponente eindringen. Darüber hinaus besteht die Möglichkeit, dass Löcher, z. B. Bohrungen, zu einer Abnutzung, insbesondere Korrosion, der Fahrradkomponente führen.

Das Dokument US2016/362154A1 offenbart alle Merkmale des Oberbegriffs des unabhängigen Anspruchs 1.

Aufgabe der Erfindung ist es eine Fahrradkomponente, eine Sattelstütze und ein Fahrrad mit einem verbesserten integrierten Fahrradlicht zu schaffen.

Die Lösung der Aufgaben erfolgt erfindungsgemäß durch eine Fahrradkomponente gemäß Anspruch 1, eine Sattelstütze gemäß Anspruch 12 und ein Fahrrad gemäß Anspruch 13.

Bei der erfindungsgemäßen Fahrradkomponente handelt es sich insbesondere um eine Fahrradbeleuchtungskomponente. Bevorzugt handelt es sich bei der Fahrradkomponente um eine Fahrradkomponente zur Beleuchtung eines Fahrrads. Die Fahrradkomponente weist einen, insbesondere rohrförmigen, Hohlkörper auf. Bei dem Hohlkörper handelt es sich insbesondere um ein Rohrelement und/oder ein Rohrprofil. Der Hohlkörper weist insbesondere eine Hohlzylinderform, mit rundem, ovalem oder viereckigem Querschnitt auf. Die Fahrradkomponente weist ferner eine innerhalb des Hohlkörpers angeordnete Leuchtvorrichtung auf. Die Leuchtvorrichtung ist insbesondere zur Abgabe eines roten und/oder weißen Lichts zur Beleuchtung eines Fahrrads ausgeführt. Die Leuchtvorrichtung weist insbesondere eine oder mehrere LED auf, vorzugsweise rote und/oder weiße LED. Zur Abgabe des Lichts zur Fahrradbeleuchtung leuchtet die Leuchtvorrichtung durch eine Mantelfläche des Hohlkörpers. Bei der Mantelfläche handelt es sich bevorzugt um eine Außenfläche, insbesondere die gesamte Außenfläche des Hohlkörpers. Mit anderen Worten ist die Fahrradkomponente derart ausgeführt, dass die Leuchtvorrichtung die Mantelfläche des Hohlkörpers durchscheint bzw. durchleuchtet. Vorteilhaft ist durch die erfindungsgemäße Fahrradkomponente insbesondere eine integrierte, vorzugsweise vollkommen innerhalb des Fahrradrahmens integrierte Fahrradbeleuchtung umgesetzt. Die Mantelfläche an sich, erfindungsgemäß das Material der Mantelfläche ist lichtdurchlässig ausgeführt.

In bevorzugter Ausführung ist die Mantelfläche, insbesondere vollständig, geschlossen ausgeführt. Die Mantelfläche ist insbesondere lochlos und/oder öffnungslos ausgeführt, sodass die Mantelfläche keinerlei Loch und/oder keinerlei Öffnung aufweist.

In bevorzugter Ausführung weist die Mantelfläche, insbesondere der Hohlkörper, Verbundwerkstoff, insbesondere CFK und/oder GFK, auf, besteht vorzugsweise daraus.

Erfindungsgemäß ist die Mantelfläche, insbesondere der Hohlkörper, zumindest teilweise, beschichtet, bspw. lackiert. Die Beschichtung ist erfindungsgemäß lichtundurchlässig ausgeführt. Somit ist es, dass an Stellen der Beschichtung die Leuchtvorrichtung nicht durch die Mantelfläche leuchtet.

In bevorzugter Ausführung weist die Mantelfläche mindestens ein Fenster zum Durchleuchten mit der Leuchtvorrichtung auf. Das Fenster ist insbesondere einstückig, auch als integral zu bezeichnen, mit der Mantelfläche ausgeführt. Vorzugsweise ist das Fenster aus demselben Material wie die Mantelfläche hergestellt. Das Fenster weist insbesondere eine runde oder eckige Form auf. Insbesondere beträgt die Fläche des Fensters unter 30 % der der Mantelfläche, bevorzugt unter 20 %, besonders bevorzugt unter 10 %. Die Leuchtvorrichtung ist, zumindest teilweise, hinter dem Fenster angeordnet. Es handelt sich insbesondere um ein durchleuchtbares Fenster.

In bevorzugter Ausführung entspricht das Fenster einem unbeschichtetem oder lichtdurchlässig beschichtetem, Bereich, insbesondere Teilbereich, der Mantelfläche. Bevorzugt ist es somit, dass die Mantelfläche, insbesondere größtenteils, lichtundurchlässig beschichtete ist, während zur Ausbildung des durchleuchtbaren Fensters ein oder mehrere Teilbereiche unbeschichtet oder lichtdurchlässig beschichtet, also insbesondere mit einer lichtdurchlässigen Beschichtung versehen sind. Möglich ist es, dass das Fenster eine farbige, lichtdurchlässige Beschichtung aufweist, sodass ein von der Leuchtvorrichtung weiß abgegebenes Licht durch die Beschichtung farbig abgegeben wird. Die farbige Beschichtung ist insbesondere rot oder orange färben ausgeführt.

In bevorzugter Ausführung ist der Hohlkörper federnd, insbesondere als Blattfeder ausgeführt. Die Ausführung des federnden Hohlkörpers ist insbesondere bevorzugt bei einer Ausführung, bei der es sich bei der Fahrradkomponente um eine, vorzugsweise als Blattfedervorrichtung ausgeführte, Sattelstütze und/oder ein Sattelstützrohr einer Sattelstütze handelt.

Der federnde Hohlkörper ist insbesondere ausgeführt Kräfte in Querrichtung zum Hohlkörper federnd aufzunehmen. Der federnde Hohlkörper, insbesondere in Ausführung als Blattfeder, weist vorzugsweise einen Federweg von 2 mm bis 50 mm, bevorzugt von 5 mm bis 30 mm, besonders bevorzugt von 15 mm bis 25 mm auf. Der Federweg des federnden Hohlkörpers verläuft insbesondere in Querrichtung und/oder Radialrichtung des Hohlkörpers.

In bevorzugter Ausführung ist die Leuchtvorrichtung mit einer in den Hohlkörper einschiebbaren Hülse verbunden. Die Hülse weist einen, insbesondere flexiblen, Hülsenkörper auf. Bei der Hülse handelt es sich insbesondere um eine Steckhülse. Die Leuchtvorrichtung ist insbesondere in die Hülse integriert. Die Hülse weist insbesondere im Wesentlichen die gleiche Außenform wie die Innenform des Hohlkörpers auf, wobei die Außenform der Hülse insbesondere einen kleineren Maßstab aufweist. Bevorzugt ist die Hülse, insbesondere an den Grundflächen, einseitig oder beidseitig geschlossen.

In bevorzugter Ausführung ist die Hülse, insbesondere der Hülsenkörper, zur federnden Aufnahme von dem Hohlkörper übertragenen Kräften, insbesondere Querkräften, ausgebildet ist. Diese Ausführung der Hülse mit federnder Kraftaufnahme ist insbesondere bevorzugt bei Ausführung der Fahrradkomponente mit federndem Hohlkörper. Bevorzugt ist es hierbei, dass die Hülse die Federbewegung des Hohlkörpers aufnimmt, insbesondere mitmacht. Es ist bevorzugt, dass die Hülse flexibel, insbesondere biegbar ausgeführt ist. Vorzugsweise weist die Hülse Kunststoff auf, besteht insbesondere daraus. Die Hülse ist insbesondere ausgeführt Kräfte in Querrichtung zum Hohlkörper federnd aufzunehmen. Die Hülse weist vorzugsweise einen Federweg von 2 mm bis 50 mm, bevorzugt von 5 mm bis 30 mm, besonders bevorzugt von 15 mm bis 25 mm auf. Der Federweg der Hülse verläuft insbesondere in Querrichtung und/oder Radialrichtung der Hülse.

In bevorzugter Ausführung weist die Hülse eine Stromquelle und/oder eine Steuereinheit auf. Insbesondere handelt es sich bei der Stromquelle um eine, insbesondere aufladbare, Batterie. Die Steuereinheit weist insbesondere eine PCB auf, besteht vorzugsweise daraus. Die Steuereinheit ist insbesondere zur Aktuierung, vorzugsweise zum Ein- und Ausschalten, der Leuchtvorrichtung ausgeführt. Die Steuereinheit ist insbesondere mittels kabelgebunden und/oder kabellos durch einen Benutzer ansteuerbar. Zur Kabellosen Ansteuerung weist die Steuereinheit insbesondere ein Funkmodul, bspw. ein Bluetoothmodul oder ein Wifimodul auf. Bevorzugt weist die Hülse ferner einen Konnektor zur Strom- und/oder Signalübertragung, zum Betrieb der Leuchtvorrichtung auf. Bei dem Konnektor handelt es sich insbesondere um einen Anschluss, vorzugsweise einen Stecker oder eine Steckdose. Insbesondere ist die Leuchtvorrichtung, die Stromquelle und/oder die Steuereinheit unmittelbar mit der Hülse verbunden. Bevorzugt ist die Leuchtvorrichtung, die Stromquelle und/oder die Steuereinheit fest verbunden und/oder zusammen beweglich und/oder einstückig mit der Hülse ausgeführt.

In bevorzugter Ausführung weist die Hülse und/oder der Hohlkörper eine Vorrichtung, insbesondere Form, zur eindeutigen relativen Lagedefinition zwischen Hülse und Hohlkörper auf. Vorzugsweise weist die Hülse und/oder der Hohlkörper einen Formschlussverbinder, wie bspw. eine Nut und/oder eine unregelmäßige Form zur relativen Lagedefinition auf. Die Vorrichtung zur Lagedefinition ist insbesondere zur eindeutigen Definition der relativen Radialposition zwischen Hülse und Hohlkörper ausgeführt. Vorzugsweise definiert die Vorrichtung zur Lagedefinition eine einzige Lage.

In bevorzugter Ausführung weist der Hohlkörper einen, insbesondere in einem Inneren des Hohlkörpers angeordneten, Hülsen-Konnektor zur Strom- und/oder Signalübertragung an die Hülse zum Betrieb der Leuchtvorrichtung auf. Es ist bevorzugt, dass der Hülsen-Konnektor als ein Gegenstück des Konnektors der Hülse ausgeführt ist. Bei dem Hülsen-Konnektor handelt es sich insbesondere um einen Anschluss, vorzugsweise einen Stecker oder eine Steckdose.

In bevorzugter Ausführung ist der Hülsen-Konnektor und der Konnektor der Hülse als, insbesondere ineinander einschiebende, Steckverbindung ausgeführt. Der Hülsen-Konnektor weist hierbei insbesondere einen Stecker und der Konnektor der Hülse eine Steckdose, oder umgekehrt, auf.

In bevorzugter Ausführung weist die Hülse und/oder der Hohlkörper eine Fixiervorrichtung zur Fixierung der Hülse innerhalb des Hohlkörpers auf. Die Fixiervorrichtung ist insbesondere zur kraftschlüssigen und/oder formschlüssigen Fixierung ausgeführt. Die Fixiervorrichtung weist insbesondere eine Dämpfungsvorrichtung zur Dämpfung von Kräften zwischen Hülse und Hohlkörper auf. Bevorzugt ist die Fixiervorrichtung zur, insbesondere lösbaren radialen Klemmung, zwischen Hülse und Hohlkörper ausgeführt. Insbesondere weist die Fixiervorrichtung eine, vorzugsweise umlaufende, Klemmbacke auf, die, insbesondere lösbar, eine radiale Klemmung gegen die Innenseite des Hohlkörpers aufbringt. Zur radialen Klemmung weist die Fixiervorrichtung insbesondere eine, vorzugsweise axiale, Schraubvorrichtung auf, die die radiale Klemmung auslöst. Die Dämpfungsvorrichtung weist insbesondere einen oder mehrere O-Ringe, insbesondere aus Gummi, auf.

Bevorzugt ist es, dass anstelle oder zusätzlich zu der Ausführung der Hülse mit federnder Kraftaufnahme, insbesondere der flexiblen Ausführung der Hülse, die Verbindung zwischen Hülse und Hohlkörper, insbesondere die Fixiervorrichtung, zur Aufnahme von dem Hohlkörper zur Hülse übertragenen Kräften, insbesondere Querkräften, ausgebildet ist. Die Verbindung, insbesondere die Fixiervorrichtung, ist hierbei vorzugsweise dämpfend und/oder federnd ausgeführt.

In bevorzugter Ausführung weist der Hohlkörper einen, insbesondere in einer Bohrung in der Mantelfläche angeordneten, Hohlkörper-Konnektor zur Strom- und/oder Signalübertragung zum Betrieb der Leuchtvorrichtung auf. Weist die Mantelfläche eine Bohrung auf, ist es bevorzugt, dass die Bohrung lediglich den Hohlkörper-Konnektor und/oder ein Kabel des Hohlkörper-Konnektors aufnimmt. Bevorzugt ist die Bohrung nicht zum Lichtdurchlass der Leuchtvorrichtung ausgeführt. Die Strom- und/oder Signalübertragung des Hohlkörper-Konnektor erfolgt insbesondere vom Hohlkörper-Konnektor zum Konnektor der Hülse, vorzugsweise über den Hülsen-Konnektor. Über den Hohlkörper-Konnektor lässt sich insbesondere eine, vorzugsweise anschließende, Stromverbindung zum Laden der Batterie der Hülse herstellen.

In bevorzugter Ausführung handelt es sich bei dem Hohlkörper um eine Sattelstütze oder ein Sattelstützrohr oder einen Lenker oder eine Lenkerstange oder ein Rahmenrohr. Die Sattelstütze oder das Sattelstützrohr ist insbesondere flexibel und/oder federnd, vorzugsweise als Blattfeder, ausgeführt. Die Sattelstützenausführung oder die Sattelstützrohrausführung entspricht insbesondere der in EP2415657A1 oder der in EP2683598A1 beschriebenen Sattelstütze bzw. dem Sattelstützrohr, insbesondere gemäß einem der entsprechenden dortigen Patentansprüche. Bei dem Rahmenrohr handelt es sich insbesondere um eine Sitzstrebe, ein Oberrohr, ein Sitzrohr, ein Unterrohr, eine Gabel, ein Steuerrohr, eine Kettenstrebe oder ein Unterrohr. Die Sattelstützenausführung entspricht insbesondere dem der Sattelstütze S14 VCLS 2.0 CF oder S15 VCLS 2.0 CF von Canyon.

Bei der erfindungsgemäßen Sattelstütze handelt es sich insbesondere um eine Sattelstütze mit Blattfedervorrichtung. Die Sattelstütze weist ein oder zwei Sattelstützenrohre auf. Bei dem Sattelstützrohr oder bei beiden Sattelstützrohren handelt es sich bevorzug um federnde, besonders bevorzugt federnd als Blattfedern ausgeführte, Sattelstützrohre. Bei dem Sattelstützrohr oder bei beiden Sattelstützrohren handelt es sich um eine Fahrradkomponente mit einem oder mehreren Merkmalen der erfindungsgemäßen Fahrradkomponente.

Bei dem erfindungsgemäßen Fahrrad handelt es sich insbesondere um ein E-Bike oder ein Pedelec. Das Fahrrad weist mindestens eine Fahrradkomponente mit einem oder mehreren Merkmalen der erfindungsgemäßen Fahrradkomponente auf, und/oder das Fahrrad weist eine Sattelstütze mit einem oder mehreren Merkmalen der erfindungsgemäßen Sattelstütze auf.

In bevorzugter Ausführung weist das Fahrrad eine, insbesondere mit einem Fahrradrahmen des Fahrrads verbundene, Fahrradbatterie auf. Die Fahrradbatterie ist bevorzugt unmittelbar mit dem Fahrradrahmen, insbesondere einem Unterrohr des Fahrradrahmens, verbunden. Bei der Fahrradbatterie handelt es sich insbesondere um eine Batterie zum Antrieb des Fahrrads, vorzugsweise des E-Bike oder Pedelec. Die Fahrradbatterie weist vorzugsweise mindestens 300 Wh auf. Bevorzugt ist es, dass die Leuchtvorrichtung zur Stromversorgung mit der Fahrradbatterie, insbesondere kabelgebunden, verbunden ist.

In bevorzugter Ausführung weist das Fahrrad einen Motor mit einer Lichtsteuerung auf. Die Leuchtvorrichtung ist zur Steuerung der Lichtabgabe der Leuchtvorrichtung mit der Lichtsteuerung des Motors, insbesondere kabelgebunden oder kabellos, verbunden. Insbesondere ist die Lichtsteuerung des Motors mit der Steuereinheit verbunden. Bei kabelgebundener Verbindung ist es bevorzugt, dass ein oder mehrere Kabel der kabelgebundenen Verbindung innenliegend durch den Hohlkörper und/oder zumindest teilweise innenliegend durch Rohrelemente des Fahrradrahmens verlaufen.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittdarstellung einer Ausführungsform einer erfindungsgemäßen Fahrradkomponente,
- Fig. 2: die Fahrradkomponente aus Fig. 1 angeschlossen an eine Fahrradbatterie,
- Fig. 3: eine schematische Schnittdarstellung weiteren Ausführungsform einer erfindungsgemäßen Fahrradkomponente, und
- Fig. 4: eine schematische Teildarstellung einer Ausführungsform eines erfindungsgemäßen Fahrrads mit einer Ausführungsform einer erfindungsgemäßen Sattelstütze mit einer weiteren Ausführungsform einer erfindungsgemäßen Fahrradkomponente.

Ähnliche oder identische Bauteile oder Elemente werden in den Figuren mit den gleichen Bezugszeichen bzw. Variationen davon identifiziert. Insbesondere zur verbesserten Übersichtlichkeit werden, vorzugsweise bereits identifizierte Elemente nicht in allen Figuren mit Bezugszeichen versehen.

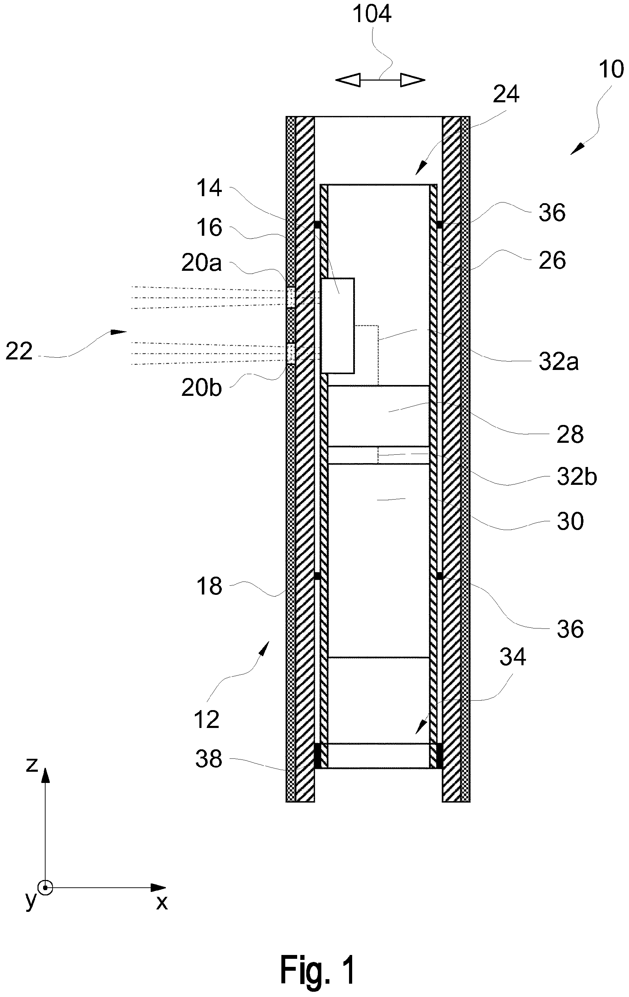

Figur 1 zeigt eine Ausführungsform einer erfindungsgemäßen Fahrradkomponente 10, wobei es sich bevorzugt um ein Sattelstützrohr handelt. Die Fahrradkomponente 10 weist einen Hohlkörper 12 mit einer Mantelfläche 16 auf. Der Hohlkörper 12 weist insbesondere eine Hohlzylinderform mit rundem oder ovalem Querschnitt auf.

Die Mantelfläche 16 weist an der Außenseite eine, lichtundurchlässige, Beschichtung 18 auf, wobei die Beschichtung 18 dargestellt durch zwei Fenster 20a, 20b unterbrochen ist. Die Fenster 20a, 20b entsprechen insbesondere einem nicht beschichteten Bereich der Mantelfläche 16 oder einem lichtdurchlässig beschichteten Bereich der Mantelfläche 16.

Innerhalb des Hohlkörpers 12 ist, insbesondere eingeschoben, eine Hülse 24 angeordnet. Die Hülse 24 ist vorzugsweise mittels einer, insbesondere kraftschlüssigen, Fixiervorrichtung 34 innerhalb des Hohlkörpers, bevorzugt lösbar, fixiert. Bevorzugt ist die Fixiervorrichtung 34 zur, insbesondere lösbaren radialen Klemmung, zwischen Hülse 24 und Hohlkörper 12 ausgeführt. Zur radialen Klemmung weist die Fixiervorrichtung 34 dargestellt eine, vorzugsweise umlaufende, Klemmbacke 38 auf, die, insbesondere lösbar, eine radiale Klemmung gegen die Innenseite des Hohlkörpers 12 aufbringt, um die Hülse 24 innerhalb des Hohlkörpers 24 zu fixieren. Die Lösbarkeit der Fixiervorrichtung 34 ist insbesondere durch eine (nicht dargestellte), vorzugsweise axiale, Schraubvorrichtung umgesetzt, die die radiale Klemmung auslöst. Die Fixiervorrichtung 34 weist insbesondere eine Dämpfungsvorrichtung 36 zur Dämpfung von Kräften zwischen Hülse 24 und Hohlkörper 12 auf. Dargestellt handelt es sich bei der Dämpfungsvorrichtung um zwei O-Ringe 36, insbesondere aus Gummi.

Die Hülse 12 weist eine Leuchtvorrichtung 14 zur Erzeugung einer Fahrradbeleuchtung auf. Insbesondere weist die Leuchtvorrichtung 14 mindestens eine LED, bevorzugt eine rote und/oder weiße LED auf. Die Leuchtvorrichtung 14 ist hinter, insbesondere stirnseitig zu, den Fenstern 20a, 20b angeordnet, sodass zur Abgabe der Fahrradbeleuchtung die Leuchtvorrichtung 14 durch die Mantelfläche 16 des Hohlkörpers 12 und aus den Fenstern 20a, 20b hinaus leuchtet. Das Durchleuchten und somit die Abgabe des Lichts ist schematisch durch die Strichlinien 22 dargestellt. Insbesondere leuchtete die Leuchtvorrichtung nicht durch die lichtundurchlässige Beschichtung 18 der Mantelfläche. Die Mantelfläche 16 an sich, das Material der Mantelfläche 16 ist hierbei lichtdurchlässig ausgeführt. Die Mantelfläche 16 weist bevorzugt Verbundwerkstoff, insbesondere CFK und/oder GFK, auf, besteht vorzugsweise daraus.

Zum Betrieb der Leuchtvorrichtung 14 weist die Hülse 24 insbesondere eine bevorzugt eine PCB aufweisende Steuereinheit 28 und/oder eine Batterie 30 aufweisende Stromquelle auf. Die Batterie 30 ist insbesondere aufladbar. Die Signal- und/oder Stromübertragung erfolgt bevorzugt mittels Kabeln 32a, 32b. In bevorzugter Ausführung ist der Hohlkörper 12 federnd, insbesondere als Blattfeder ausgeführt. Ferner ist es bevorzugt, dass die Hülse 24, insbesondere der Hülsenkörper 26, und/oder die Verbindung zwischen Hülse 24 und Hohlkörper 12, kraftaufnehmend, bevorzugt federnd ausgeführt ist. Bei einer, bspw. biegenden, Federbewegung der Fahrradkomponente 10, insbesondere des Hohlkörpers 12 in der xy-Ebene, z. B. in Richtung des Pfeils 104 ist somit eine Federfunktion der Fahrradkomponente 10, insbesondere des Hohlkörpers 12 und der Hülse 24, umgesetzt.

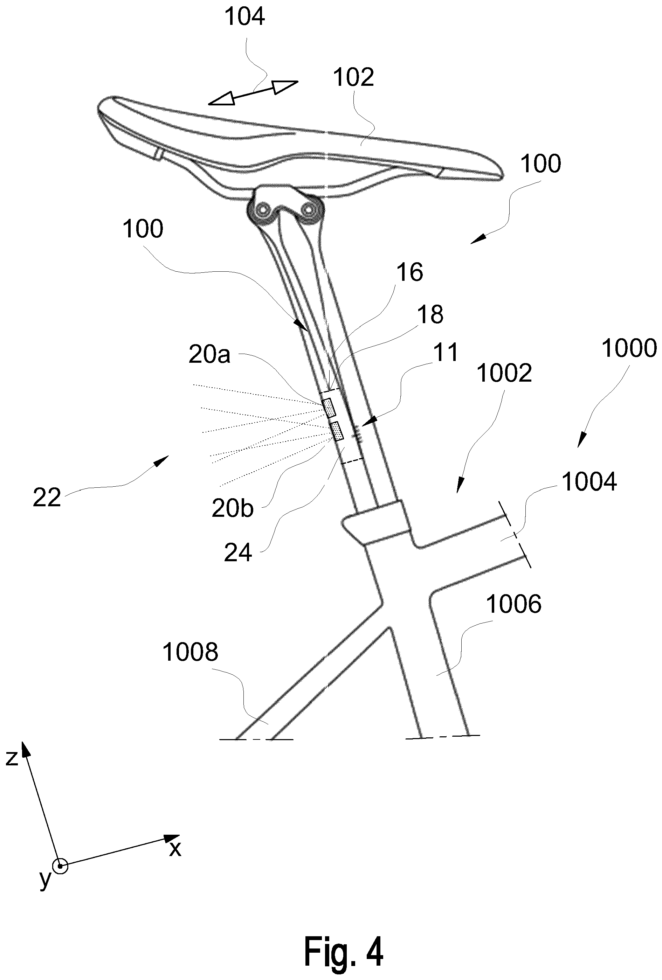

Bevorzugt sind die Fenster 20a, 20b, insbesondere bei Ausführung der Fahrradkomponente 10 als Sattelstützrohr entgegen der Fahrrichtung eines Fahrrads 1000 (vgl. bspw. Fig. 4) angeordnet. Somit kann bevorzugt ein Rücklicht des Fahrrads 1000 abgegeben werden.

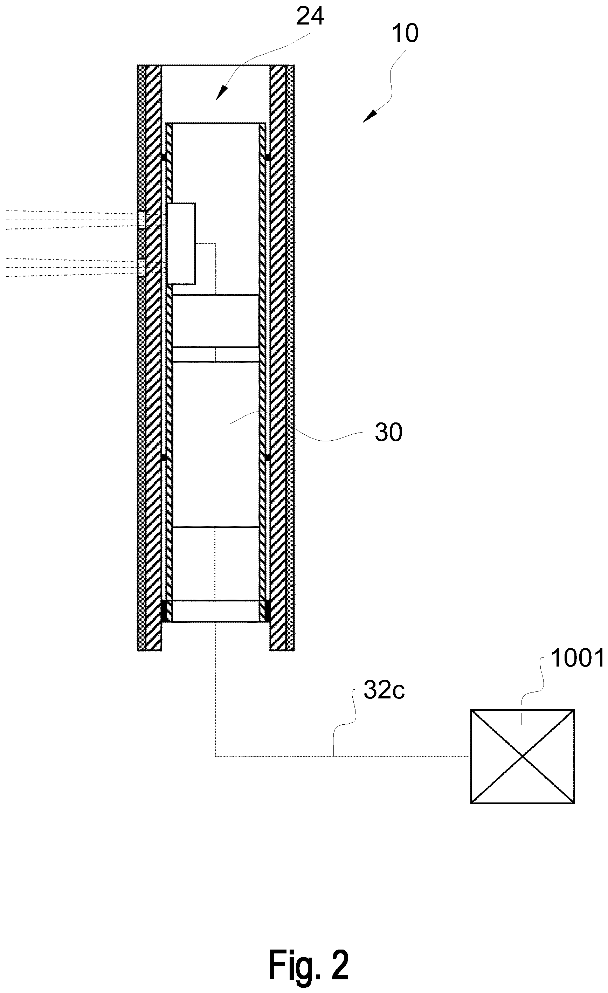

Figur 2 zeigt die Ausführungsform der Fahrradkomponente 10 aus Figur 1, wobei die Hülse 24 zur Stromversorgung, insbesondere der Batterie 30, mit einer (schematisch dargestellten) Fahrradbatterie 1001 über Kabel 32c verbunden ist. Bei der Fahrradbatterie 1001 handelt es sich insbesondere um eine Pedelec-Batterie und/oder E-Bike-Batterie. Insbesondere bei dieser Ausführung ist es alternativ auch möglich die Batterie 30 der Hülse wegzulassen.

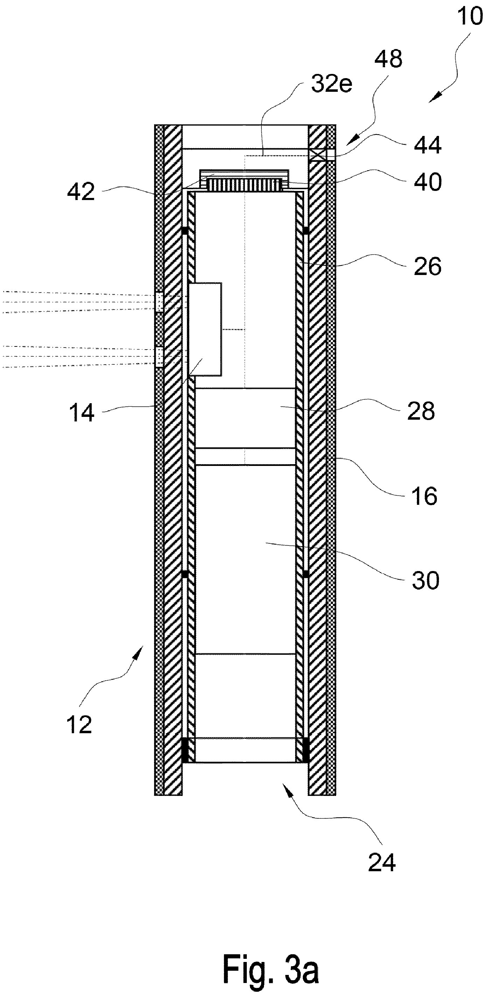

Figur 3a zeigt eine weitere Ausführungsform einer erfindungsgemäßen Fahrradkomponente 10, wobei die Ausführungsform auf der aus Fig. 1 basiert.

Im Unterschied zu der Ausführung aus Fig. 1 weist die Hülse 24 aus Fig. 3a einen Konnektor 40 zur Strom- und/oder Signalübertragung, zum Betrieb der Leuchtvorrichtung 14 auf.

Bei dem dargestellten Konnektor 40 handelt es sich um einen Stecker, der bei einem Einschieben der Hülse 24 in den Hohlkörper 12 eine strom- und/oder signalübertragende Verbindung mit einem Hülsen-Konnektor 42 des Hohlkörpers 12 herstellt, wobei der Hülsen-Konnektor 42 als Steckdose für den Stecker ausgeführt ist.

Der Hülsen-Konnektor wiederrum ist bspw. über Kabel 32e strom- und/oder signalübertragende mit einem in einer Bohrung 48 in der Mantelfläche 16 des Hohlkörpers 12 angeordneten Hohlkörper-Konnektor 44 verbunden. An den Hohlkörper-Konnektor 44 kann von außen ein (nicht dargestellter) Anschluss einer Strom- und/oder Signalverbindung erfolgen, insbesondere um die Batterie 30 der Hülse 24 zu laden und/oder um eine Aktuierung, insbesondere ein Ein- und Ausschaltsignal, der Steuereinheit 28 umzusetzen. Der Hohlkörper-Konnektor 44 kann bspw. einen USB-C Port zur Stromversorgung aufweisen.

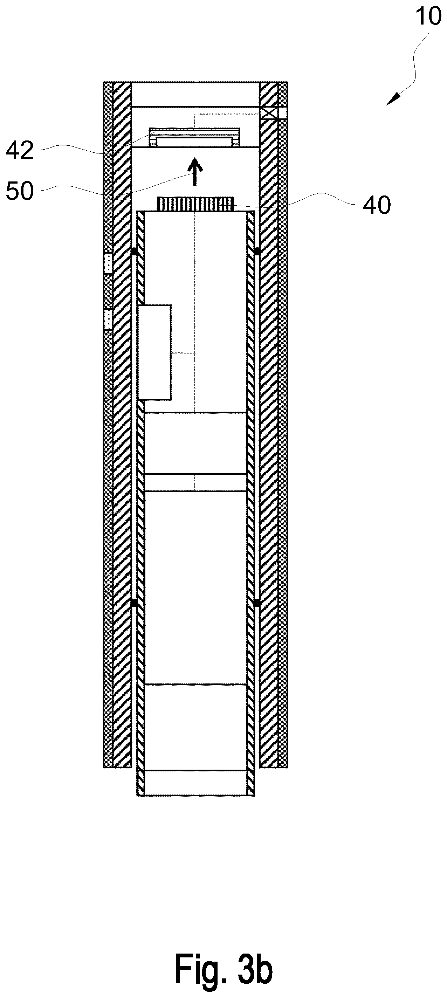

Figur 3b zeigt die Fahrradkomponente 10 aus Fig. 3a, wobei sich die Hülse 24 in einem einschiebenden Zustand (dargestellt durch Pfeil 50) vor dem Anschluss des Steckers des Konnektors 40 in die Steckdose des Hülsen-Konnektors 42 befindet.

Figur 4 zeigt eine erfindungsgemäße Ausführungsform eines Fahrrads 1000, wobei von dem Fahrrad 1000 dargestellt nur ein Teil des Rahmens 1002 mit einem Teil der Sitzstrebe 1008, einem Teil des Oberrohrs 1004 und einem Teil des Sitzrohrs 1004.

In dem Sitzrohr 1004 ist eine erfindungsgemäße Ausführungsform einer Sattelstütze 100 angeordnet.

Die Sattelstütze 100 weist zwei Sattelstützrohre 10, 11 auf. Die Ausführung der Sattelstütze 100 entspricht insbesondere dem der Sattelstütze S14 VCLS 2.0 CF oder S15 VCLS 2.0 CF von Canyon.

Das Sattelstützrohr 10 weist eine innenliegend, insbesondere eingeschobene, Hülse 24 auf. Die Ausführung der Hülse 24 entspricht dabei insbesondere im Wesentlichen der aus einer der Figuren 1-3a. Die Mantelfläche 16 des Sattelstützrohr 10 weist eine, lichtundurchlässige, Beschichtung 16 an der Außenfläche auf, wobei zwei Fenster 20a, 20b vorgesehen sind, die einem nicht beschichteten Bereich der Mantelfläche 16 entsprechen oder lichtdurchlässig beschichtet sind.

Mittels einer (nicht dargestellten) Leuchtvorrichtung 14 der Hülse 24 kann durch die Fenster 20a, 20b ein Licht 22 der Fahrradbeleuchtung, insbesondere ein Rücklicht, abgegeben werden.

Das Sattelstützrohr 11 ist insbesondere gewöhnlich, hohl ohne innenliegende Leuchtvorrichtung 14 und/oder Hülse 24 ausgeführt.

Die dargestellte Sattelstütze 100 ist insbesondere als Blattfedervorrichtung ausgeführt, vorzugsweise entspricht die Sattelstütze 100 einer Blattfeder, wobei die Sattelstützrohre 10, 11 flexible federnd ausgeführt sind. Die Sattelstütze 100 ist insbesondere zur Federung von Kräften in der xy-Ebene, z. B. in Richtung des Pfeils 104 ausgeführt. Die Kräfte wirken bspw. aufgrund eines auf dem mit der Sattelstütze 100 verbundenen Sattels 102 sitzenden (nicht dargestellten) Fahrers.

Anstelle oder zusätzlich zu der dargestellten Ausführung, bei der die Fahrradkomponente 10 einem Sattelstützrohr entspricht, ist es bevorzugt auch möglich, dass eine erfindungsgemäße Fahrradkomponente der Sitzstrebe 1008, dem Oberrohr 1004 und/oder dem Sitzrohr 1004 entspricht, insbesondere dass die erfindungsgemäße Fahrradbeleuchtung entsprechend ausgeführt ist.

## Patentansprüche

1. Fahrradkomponente (10), mit
einem, insbesondere rohrförmigen, Hohlkörper (12), und
einer innerhalb des Hohlkörpers (12) angeordneten Leuchtvorrichtung (14),
wobei die Leuchtvorrichtung (14) zur Abgabe einer Fahrradbeleuchtung durch
eine Mantelfläche (16) des Hohlkörpers (12) leuchtet,
wobei
das Material der Mantelfläche (16) lichtdurchlässig ist, und **dadurch gekennzeichnet, dass**
die Mantelfläche (16), zumindest teilweise, lichtundurchlässig beschichtet, ist.

2. Fahrradkomponente (10) nach Anspruch 1, **dadurch gekennzeichnet, dass** die Mantelfläche (16), insbesondere vollständig, geschlossen ausgeführt ist.

3. Fahrradkomponente (10) nach Anspruch 1 oder 2, **dadurch gekennzeichnet, dass** die Mantelfläche (16), insbesondere lichtdurchlässigen, Verbundwerkstoff, bspw. CFK und/oder GFK, aufweist, vorzugweise daraus besteht.

4. Fahrradkomponente (10) nach einem der Ansprüche 1 bis 3, **dadurch gekennzeichnet, dass** die Mantelfläche (16) mindestens ein Fenster (20a, 20b) zum Durchleuchten mit der Leuchtvorrichtung (14) aufweist.

5. Fahrradkomponente (10) nach Anspruch 4, **dadurch gekennzeichnet, dass** das Fenster (20a, 20b) einem unbeschichtetem oder lichtdurchlässig beschichtetem, Bereich, insbesondere Teilbereich, der Mantelfläche (16) entspricht.

6. Fahrradkomponente (10) nach einem der Ansprüche 1 bis 5, **dadurch gekennzeichnet, dass** der Hohlkörper (12) federnd, insbesondere als Blattfeder ausgeführt ist.

7. Fahrradkomponente (10) nach einem der Ansprüche 1 bis 6, **dadurch gekennzeichnet, dass** die Leuchtvorrichtung (14) mit einer in den Hohlkörper (12) einschiebbaren Hülse (24) verbunden ist, wobei die Hülse (24) einen, insbesondere flexiblen, Hülsenkörper (26) aufweist, wobei vorzugsweise die Hülse (24), insbesondere der Hülsenkörper (26), zur federnden Aufnahme von dem Hohlkörper (12) übertragenen Kräften, insbesondere Querkräften, ausgebildet ist.

8. Fahrradkomponente (10) nach Anspruch 7, **dadurch gekennzeichnet, dass** die Hülse (24) eine Stromquelle und/oder eine Steuereinheit (28), sowie insbesondere einen Konnektor (40) zur Strom- und/oder Signalübertragung, zum Betrieb der Leuchtvorrichtung (14) aufweist; und/oder, **dadurch gekennzeichnet, dass** die Hülse (24) und/oder der Hohlkörper (12) eine Vorrichtung, insbesondere Form, zur eindeutigen Lagedefinition zwischen Hülse (24) und Hohlkörper (12) aufweist.

9. Fahrradkomponente (10) nach Anspruch 7 oder 8, **dadurch gekennzeichnet, dass** der Hohlkörper (12) einen, insbesondere in einem Inneren des Hohlkörpers (12) angeordneten, Hülsen-Konnektor (42) zur Strom- und/oder Signalübertragung an die Hülse (24) zum Betrieb der Leuchtvorrichtung (14) aufweist, wobei vorzugsweise der Hülsen-Konnektor (42) und ein Konnektor (40) der Hülse (24) als, insbesondere einschiebende, Steckverbindung ausgeführt sind.

10. Fahrradkomponente (10) nach einem der Ansprüche 7 bis 9, **dadurch gekennzeichnet, dass** die Hülse (24) und/oder der Hohlkörper (12) eine Fixervorrichtung (34) zur insbesondere kraftschlüssigen, Fixierung der Hülse (24) innerhalb des Hohlkörpers (12) aufweist.

11. Fahrradkomponente (10) nach einem der Ansprüche 1 bis 10, **dadurch gekennzeichnet, dass** der Hohlkörper (12) einen, insbesondere in einer Bohrung (48) in der Mantelfläche (16) angeordneten, Hohlkörper-Konnektor zur Strom- und/oder Signalübertragung zum Betrieb der Leuchtvorrichtung (14) aufweist; und/oder **dadurch gekennzeichnet, dass** es sich bei dem Hohlkörper (12) um eine Sattelstütze (100) und/oder ein Sattelstützrohr und/oder einen Lenker und/oder eine Lenkerstange und/oder ein Rahmenrohr handelt.

12. Sattelstütze (100) mit einem oder zwei, bevorzug federnden, besonders bevorzugt federnd als Blattfedern ausgeführten, Sattelstützrohren, wobei es sich bei einem oder beiden Sattelstützrohren um eine Fahrradkomponente (10) nach einem der Ansprüche 1 bis 11 handelt.

13. Fahrrad (1000), insbesondere E-Bike oder Pedelec, mit
mindestens einer Fahrradkomponente (10) nach einem der Ansprüche 1 bis 11, und/oder
einer Sattelstütze (100) nach Anspruch 12.

14. Fahrrad (1000) nach Anspruch 13, **dadurch gekennzeichnet, dass** das Fahrrad (1000) eine, insbesondere mit einem Fahrradrahmen (1002) des Fahrrads (1000) verbundene, Fahrradbatterie (1001) aufweist, wobei die Leuchtvorrichtung (14) zur Stromversorgung mit der Fahrradbatterie (1001) verbunden ist, und/oder **dadurch gekennzeichnet, dass** das Fahrrad (1000) einen Motor mit einer Lichtsteuerung aufweist, wobei die Leuchtvorrichtung (14) zur Steuerung der Lichtabgabe der Leuchtvorrichtung (14) mit der Lichtsteuerung des Motors, insbesondere kabelgebunden oder kabellos, verbunden ist.

## Claims

1. A bicycle component (10) comprising:
an in particular tubular hollow body (12), and
a lighting device (14) arranged inside the hollow body (12),
the lighting device (14) shining light through
a shell surface (16) of the hollow body (12) to emit bicycle light,
wherein the material of the shell surface (16) is translucent , and
**characterized in that**
the shell surface (16) is coated, at least partially, to be opaque.

2. The bicycle component (10) according to claim 1, **characterized in that** the shell surface (16) is designed in a closed manner, in particular completely closed.

3. The bicycle component (10) according to claim 1 or 2, **characterized in that** the shell surface (16) comprises in particular translucent composite material such as CFRP and GFRP, the shell surface preferably being made thereof.

4. The bicycle component (10) according to one of claims 1 to 3, **characterized in that** the shell surface (16) comprises at least one window (20a, 20b) for transillumination by the lighting device (14).

5. The bicycle component (10) according to claim 4, **characterized in that** the window (20a, 20b) corresponds to an uncoated or translucently coated area, in particular a partial area, of the shell surface (16).

6. The bicycle component (10) according to one of claims 1 to 5, **characterized in that** the hollow body (12) is designed to be resilient, in particular in the form of a leaf spring.

7. The bicycle component (10) according to one of claims 1 to 6, **characterized in that** the lighting device (14) is connected to a sleeve (24) insertable into the hollow body (12), the sleeve (24) comprising an in particular flexible sleeve body (26), the sleeve (24), in particular the sleeve body (26), preferably being configured for the resilient absorption of forces, in particular transverse forces, transmitted to the hollow body (12).

8. The bicycle component (10) according to claim, 7, **characterized in that** the sleeve (24) comprises a power source and/or a control unit (28), as well as in particular a connector (40) for current and/or signal transmission for the operation of the lighting device (14); and/or **characterized in that** the sleeve (24) and/or the hollow body (12) has a device, in particular a mold, for unambiguously defining the position between the sleeve (24) and the hollow body (12).

9. The bicycle component (10) according to claim 7 or 8, **characterized in that** the hollow body (12) comprises a sleeve connector (42) for power and/or signal transmission to the sleeve (24) for the operation of the lighting device (14), said sleeve connector being arranged in particular inside the hollow body (12), the sleeve connector (42) and a connector (40) of the sleeve (24) preferably being designed as an in particular insertable plug-in connection.

10. The bicycle component (10) according to one of claims 7 to 9, **characterized in that** the sleeve (24) and/or the hollow body (12) comprises a fixing device (34) for an in particular positive fixation of the sleeve (24) in the hollow body (12).

11. The bicycle component (10) according to one of claims 1 to 10, **characterized in that** the hollow body (12) comprises a hollow body connector for power and/or signal transmission for the operation of the lighting device (14), said hollow body connector being arranged in particular in a bore (48) in the shell surface (16); and/or **characterized in that** the hollow body (12) is a seat post (100) and/or a seat post tube and/or a handlebar and/or a handlebar stem and/or a frame tube.

12. A seat post (100) comprising one or two seat post tubes, which are preferably resilient, particularly preferred designed resiliently in the form of leaf springs, one or both seat post tubes being a bicycle component (10) according to one of claims 1 to 11.

13. A bicycle (1000), in particular an e-bike or a pedelec, comprising at least one bicycle component (10) according to one of claims 1 to 11, and/or a seat post (100) according to claim 12.

14. The bicycle (1000) according to claim 13, **characterized in that** the bicycle (1000) has a bicycle battery (1001), in particular connected to a bicycle frame (1002) of the bicycle (1000), the lighting device (14) being connected to the bicycle battery (1001) for power supply, and/or **characterized in that** the bicycle (1000) comprises a motor with a light control, the lighting device (14) being connected to the light control of the motor, in particular in a wired or wireless manner, to control light emission by the lighting device (14).

## Revendications

1. Composant de bicyclette (10), comportant
un corps creux (12), en particulier tubulaire, et
un dispositif d'éclairage (14) disposé à l'intérieur du corps creux (12), dans lequel le dispositif d'éclairage (14) éclaire à travers une surface d'enveloppe (16) du corps creux (12) pour émettre un éclairage de bicyclette, dans lequel
le matériau de la surface d'enveloppe (16) laisse passer la lumière, et **caractérisé en ce que**
la surface d'enveloppe (16) est revêtue, au moins partiellement, de manière à être opaque.

2. Composant de bicyclette (10) selon la revendication 1, **caractérisé en ce que** la surface d'enveloppe (16) est réalisée fermée, en particulier complètement.

3. Composant de bicyclette (10) selon la revendication 1 ou 2, **caractérisé en ce que** la surface d'enveloppe (16) présente un matériau composite, en particulier qui laisse passer la lumière, par exemple une matière plastique renforcée de fibres de carbone et/ou une matière plastique renforcée de fibres de verre, et en est de préférence constituée.

4. Composant de bicyclette (10) selon l'une des revendications 1 à 3, **caractérisé en ce que** la surface d'enveloppe (16) présente au moins une fenêtre (20a, 20b) destinée à être éclairée par le dispositif d'éclairage (14).

5. Composant de bicyclette (10) selon la revendication 4, **caractérisé en ce que** la fenêtre (20a, 20b) correspond à une zone, en particulier une zone partielle, non revêtue ou revêtue de manière à laisser passer la lumière de la surface d'enveloppe (16).

6. Composant de bicyclette (10) selon l'une des revendications 1 à 5, **caractérisé en ce que** le corps creux (12) est réalisé de manière à être élastique, en particulier sous forme de ressort à lame.

7. Composant de bicyclette (10) selon l'une des revendications 1 à 6, **caractérisé en ce que** le dispositif d'éclairage (14) est relié à un manchon (24) pouvant être inséré dans le corps creux (12), dans lequel le manchon (24) présente un corps de manchon (26), en particulier flexible, dans lequel le manchon (24), en particulier le corps de manchon (26), est de préférence réalisé pour absorber de manière élastique des forces, en particulier des forces transversales, transmises au corps creux (12).

8. Composant de bicyclette (10) selon la revendication 7, **caractérisé en ce que** le manchon (24) présente une source de courant et/ou une unité de commande (28), ainsi qu'en particulier un connecteur (40) pour la transmission de courant et/ou de signaux, pour faire fonctionner le dispositif d'éclairage (14) ; et/ou, **caractérisé en ce que** le manchon (24) et/ou le corps creux (12) présentent un dispositif, en particulier un moule, pour la définition univoque de la position entre le manchon (24) et le corps creux (12).

9. Composant de bicyclette (10) selon la revendication 7 ou 8, **caractérisé en ce que** le corps creux (12) présente un connecteur pour manchon (42), disposé en particulier à l'intérieur du corps creux (12), pour la transmission de courant et/ou de signaux au manchon (24) pour faire fonctionner le dispositif d'éclairage (14), dans lequel le connecteur pour manchon (42) et un connecteur (40) du manchon (24) sont de préférence réalisés sous forme de connexion enfichable, en particulier à insertion.

10. Composant de bicyclette (10) selon l'une des revendications 7 à 9, **caractérisé en ce que** le manchon (24) et/ou le corps creux (12) présente un dispositif de fixation (34) pour la fixation, en particulier par adhérence, du manchon (24) à l'intérieur du corps creux (12).

11. Composant de bicyclette (10) selon l'une des revendications 1 à 10, **caractérisé en ce que** le corps creux (12) présente un connecteur de corps creux, disposé en particulier dans un alésage (48) dans la surface d'enveloppe (16), pour la transmission de courant et/ou de signaux pour faire fonctionner le dispositif d'éclairage (14) ; et/ou **caractérisé en ce que** le corps creux (12) est une tige de selle (100) et/ou un tube de selle et/ou un guidon et/ou une barre de guidon et/ou un tube de cadre.

12. Tige de selle (100) comportant un ou deux tubes de selle, de préférence élastiques, de manière particulièrement préférée réalisés sous forme de ressorts à lames, dans laquelle l'un des tubes de selle ou les deux est un composant de bicyclette (10) selon l'une des revendications 1 à 11.

13. Bicyclette (1000), en particulier bicyclette électrique ou bicyclette à assistance électrique, comportant
au moins un composant de bicyclette (10) selon l'une des revendications 1 à 11, et/ou
une tige de selle (100) selon la revendication 12.

14. Bicyclette (1000) selon la revendication 13, **caractérisée en ce que** la bicyclette (1000) présente une batterie de bicyclette (1001), en particulier reliée à un cadre de bicyclette (1002) de la bicyclette (1000), dans laquelle le dispositif d'éclairage (14) est connecté à la batterie de bicyclette (1001) pour l'alimentation en courant, et/ou **caractérisée en ce que** la bicyclette (1000) présente un moteur comportant un dispositif de commande d'éclairage, dans laquelle le dispositif d'éclairage (14) est connecté au dispositif de commande d'éclairage du moteur, en particulier par câble ou sans câble, pour la commande de l'émission de lumière du dispositif d'éclairage (14).
